**Europäisches Patentamt**

**European Patent Office**

**Office européen des brevets**

(19)

(11) Publication number : **0 335 241 B1**

# (12) EUROPEAN PATENT SPECIFICATION

(45) Date of publication of patent specification :
09.09.92 Bulletin 92/37

(51) Int. Cl.⁵ : **G21C 3/18,** G21C 15/02

(21) Application number : **89105105.4**

(22) Date of filing : **22.03.89**

(54) **Device for control of the coolant flow to and in a nuclear fuel assembly.**

(30) Priority : **28.03.88 SE 8801141**

(43) Date of publication of application :
**04.10.89 Bulletin 89/40**

(45) Publication of the grant of the patent :
**09.09.92 Bulletin 92/37**

(84) Designated Contracting States :
**BE DE ES FR IT SE**

(56) References cited :
**SE-B- 335 770**

(56) References cited :
**SE-B- 338 623**
**SE-B- 355 890**
**SE-B- 453 441**
**US-A- 3 686 071**

(73) Proprietor : **ABB ATOM AB**
**S-721 83 Västeras (SE)**

(72) Inventor : **Nylund, Olov**
**Ragnaröksgatan 17**
**S-720 17 Västerás (SE)**

(74) Representative : **Boecker, Joachim, Dr.-Ing.**
**Rathenauplatz 2-8**
**W-6000 Frankfurt a.M. 1 (DE)**

## Description

The invention relates to a device for control of the coolant flow to and in a fuel assembly for a nuclear reactor of BWR (boiling water reactor) or PWR (pressurized water reactor) type according to the introductory part of claim 1.

The invention aims at developing a device of the above-mentioned kind which enables a control of the distribution of the coolant flow within individual fuel assemblies as well as between the various fuel assemblies in the reactor which control is responsive to the different degree of burn-up of the fuel rods, is little interference-prone and is brought about by relatively simple means.

To achieve this aim the invention suggests a device according to the introductory part of claim 1, which is characterized by the features of the characterizing part of claim 1.

Further developments of the invention are characterized by the features of the additional claims.

By controlling the coolant flow to the fuel rods in the fuel assembly, the coolant flow can be adapted to the degree of burn-up of the fuel rods.

By throttling the coolant flow to the most burnt-up fuel assemblies of a nuclear reactor, a larger coolant flow to the less burnt-up fuel assemblies, which are thus loaded to a greater extent, can be obtained in the case of an unchanged total core coolant flow. During irradiation, the fuel rods in the fuel assemblies will exhibit an irradiation growth which, because of the elongated shape of the fuel rods, results in a considerable linear expansion. The linear growth of the fuel rods, caused by the irradiation, can be utilized to achieve a burn-up-dependent throttle control of the coolant flow. To enable the elongated fuel rods to be used for a coolant flow control, one end of the fuel rods is shaped so as to cooperate with an opposite opening in a top tie or bottom tie plate of the fuel assembly, thus controlling the coolant flow to the fuel rods of the fuel assembly. The fuel rods always grow to a greater extent than a fuel box in a fuel assembly for a boiling water reactor (BWR) and to a greater extent than the control rod guide tubes of a fuel assembly for a pressurized water reactor (PWR).

Alternatively, the control rod guide tubes for the fuel assembly can be made of a material having different specific irradiation growth rates. The control rod guide tubes with a low irradiation growth may be attached to both the top tie plate and the bottom tie plate, whereas the control rod guide tubes having a high irradiation growth may be attached to the bottom tie plate only but may support throttle members for the outlet openings in the top tie plate. Because of the difference in irradiation growth, the throttle members will approach the outlet openings during burn-up, thus throttling the coolant flow through the fuel assembly.

With burnup-dependent throttle means, the core can be charged for a better fuel utilization since a higher load can be permitted for relatively fresh fuel. Alternatively, the pump effect can be reduced by the coolant flow being distributed in an optimum manner so that a lower total coolant flow can be allowed.

The invention will now be described in greater detail with reference to the accompanying drawings showing - by way of example - in

Figure 1 two fuel rods in a fuel assembly having burnup-dependent inlet throttling,

Figures 2 and 3 fuel rods in a fuel assembly having burnup-dependent outlet throttling,

Figures 4 and 5 a fuel rod with a burnup-dependent inlet opening,

Figure 6 a fuel assembly with control rod guide tubes having different specific irradiation growth rates.

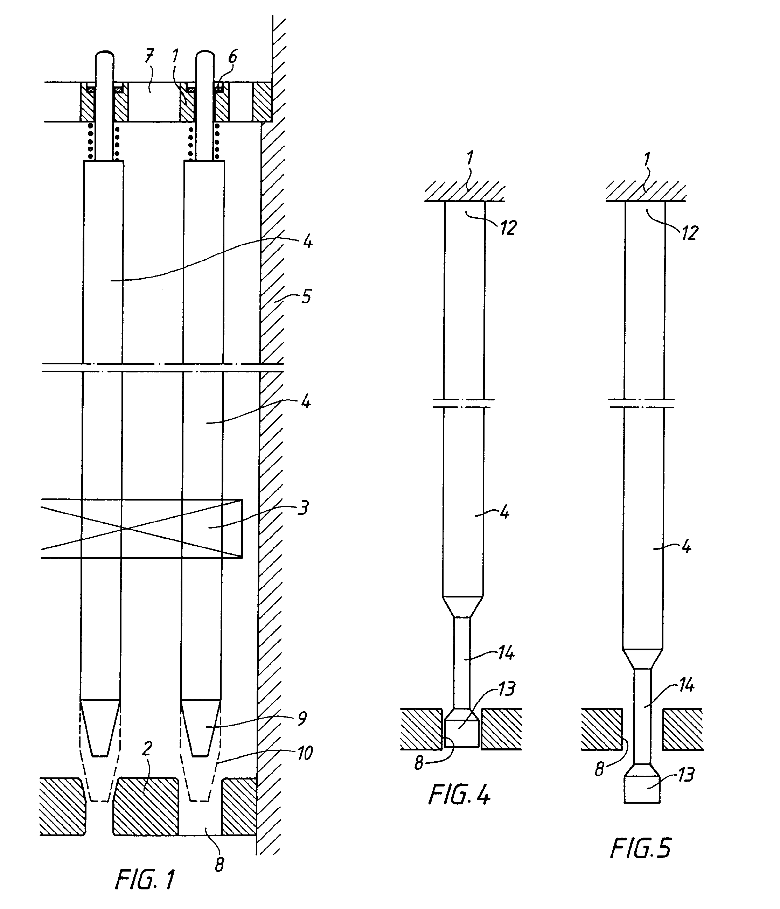

Figure 1 shows in simplified form the structure of a BWR or PWR fuel assembly with a top tie plate 1, a bottom tie plate 2, a spacer 3 and fuel rods 4. In a fuel assembly a bundle of fuel rods may be kept together and fixed by means of several spacers. 5 designates a box wall of a BWR fuel assembly or a control rod guide tube for a PWR fuel assembly. The fuel assemblies 4 are here attached suspended from the top tie plate 1. A bayonet-type clutch 6 is able to connect each fuel rod to the top tie plate 1. Between the attachments in the top tie plate 1 there are openings 7 for the coolant flow. Also the bottom tie plate 2 is provided with openings 8 for the coolant flow, which are positioned opposite to but spaced apart from the ends of the rods in order to allow passage of the coolant as shown in Figure 1 with the end portions of the fuel rods depicted in full lines. The linear growth of the fuel rods caused by irradiation will bring about a burnup-dependent throttling of the coolant flow as the end portions 9 of the rods 4 move closer to and eventually into the openings 8 in the bottom tie plate 2. The end portions 9 of the rods 4 and the corresponding openings 8 in the bottom tie plate 2 can be formed such as to bring about the desired throttling characteristics. The dash-dotted contour line 10 for the end portions 9 show how the fuel rods 4 have been extended because of the irradiation and how the bevelled conical end portions 9 of the rods 4 have been inserted into the corresponding openings 8 in the bottom tie plate 2. The burnup-dependent inlet throttling is thus brought about with the end portions 9 of the rods 4 in the openings 8 for the coolant in the bottom tie plate 2.

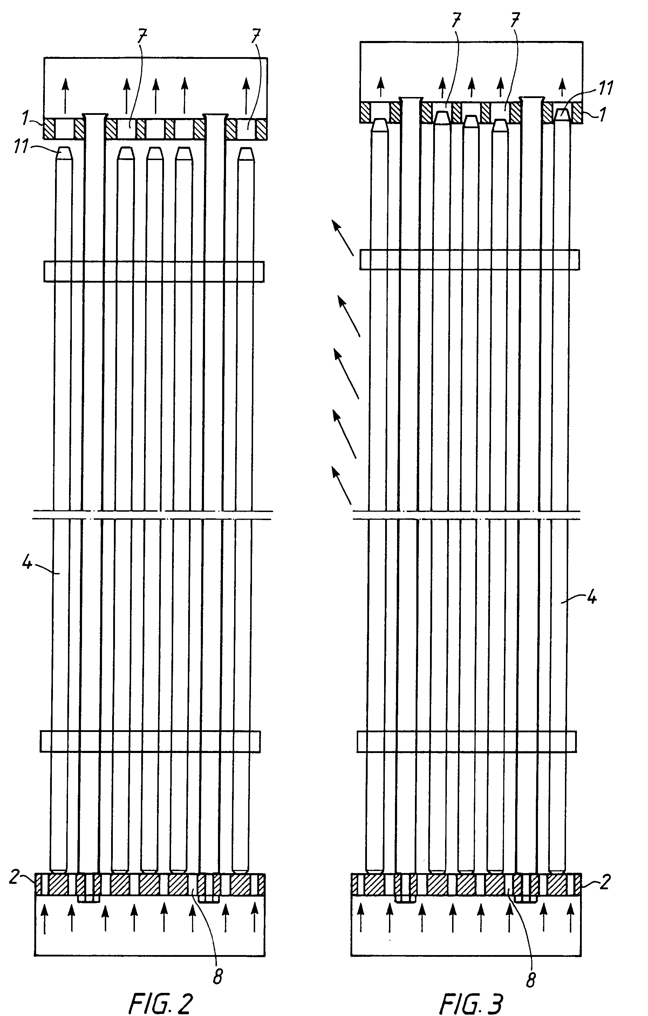

Figures 2 and 3 show a fresh and a burnt-up PWR fuel assembly, respectively, with a burnup-dependent outlet throttling. For a PWR fuel assembly it may be more advantageous to throttle the outlet openings 7. The water which flows into the flow-throttling fuel assembly will then be redistributed in the upper part of the fuel assembly in accordance with the actual pattern of different length growth achieved for the individual fuel rods of the fuel assembly. This means that more intense cooling is provided for those fuel rods which are in better need of it, and thus can be subjected to a higher load. The fuel rods 4 in Figures 2 and 3 rest on the bottom tie plate 2, or are fixed thereto, and have their free upper ends 11 directed towards the top tie plate 1. By forming the geometry for the ends 11 of the rods 4 and the openings 7 in a suitable manner, the characteristics of the throttling can be chosen. With a varying degree of burn-up of the fuel rods or depending on varying materials in the fuel rods, a non-uniform outlet throttling can be obtained during the burn-up.

Figure 2 shows a fresh fuel assembly without a proper outlet throttling, since the upper ends of the rods do not disturb the coolant flow through the outlet openings. Figure 3 shows a burnt-up fuel assembly in which the bevelled portion 11 of the upper ends of the rods are more or less inserted into the openings 7 for throttling the coolant flow through the fuel assembly. The coolant flow to the burnt-up fuel assembly will then partially be forced away from the burnt-up fuel assembly towards other adjacent fuel assemblies with larger through-flow areas, for example those with lower degrees of burn-up.

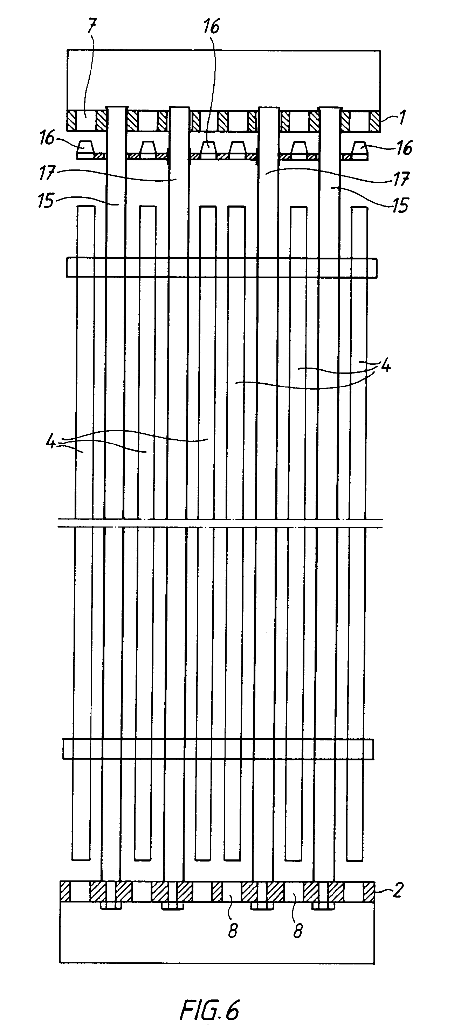

Figures 4 and 5 show a principle of an inlet throttling which is reduced with the burn-up. Figure 4 shows a fuel rod in a fresh fuel assembly with a fixed upper end 12. The lower end 13 of the fuel rod 4 may be formed so as to substantially correspond to the opening 8. Near the lower end of the fuel rod 4, the fuel rod 4 may be formed with a tapering portion or with longitudinal slots. Because of the linear expansion, arising due to the irradiation growth, the rods 4 will grow downwards during burn-up, as is shown in Figure 5, and the tapering portion of the fuel rod 4 will be located in the opening 8, thus obtaining a reduced inlet throttling resulting in an increased flow area for the coolant flow.

By arranging the fuel rods in a PWR fuel assembly in such a way that certain rods grow upwards and certain grow downwards, the inlet throttling can be reduced to the same extent as the outlet throttling increases. In this way, a redistribution of the passage of the coolant flow can be obtained without the total flow resistance increasing.

It is also possible to arrange, at the inlet, a redistribution of the flow through the fuel assembly by giving centrally located rods an increasing throttling and peripherally located rods a decreasing throttling with increased burn-up.

It is also feasible to control the flow through the fuel assembly by making the control rod guide tubes of materials having different specific irradiation growth rates. Figure 6 shows how a PWR fuel assembly with a burnup-dependent outlet throttling is formed. A top tie plate 1 is fixed to the control rod guide tubes 15 with a low specific irradiation growth (for example, stress-relieve annealed material). A throttling member 16 is fixed to the control rod guide tube 17 with a high specific irradiation growth (for example, cold-worked material).

Different irradiation growth can be obtained by different manufacturing processes. Cold-worked tubes grow faster than stress-relieve annealed tubes. Figure 6 shows an outlet throttling, but an inlet throttling can be controlled in a corresponding manner. During burn-up, the throttle member will thus approach the top tie plate 1. The throttle member is adapted so as to more or less - or to different degrees - clog the openings 7 for the passage of coolant flow in the top tie plate 1. The throttle member 16 may consist of a projection attached to a control rod guide tube 17, which projection may be located opposite to the opening 7 in the top tie plate 1 and further be provided with a sealing or throttling portion adapted to the opening 7. With this type of outlet throttling, it is possible, in reactors of PWR type, to redistribute the flow from burnt-up fuel assemblies to fresh assemblies.

In the afore-described embodiments of the invention it is assumed that the elements 4 and 17 exhibit a greater irradiation growth than the members 5 and 15. However, the invention is also applicable by choosing materials for said members and elements that cause the members 5 and 15 to expand stronger than the elements 4 and 17 upon irradiation. Such devices could be implemented, for example, by using designs according to Figure 5 for the fuel rods or by arranging the throttling members 16 in Figure 6 on the upper side of the top tie plate and in opposite direction.

## Claims

1. Device for control of the coolant flow to and in a fuel assembly for a nuclear reactor of BWR (boiling water reactor) or PWR (pressurized water reactor) type, in which the fuel assembly comprises a top tie plate (1), a bottom tie plate (2), fuel rods (4) and spacers (3), said two tie plates (1,2) being connected by members, such as a first type of control rod guide tubes (15) or a fuel assembly wall (5), and being provided with a plurality of openings (7, 8) for the coolant flow, the fuel assembly further comprising elongated elements directly or indirectly carried by the top tie plate (1) and/or the bottom tie plate (2), such as fuel rods (4) and/or control rod guide tubes (17) of a second type, **characterized** in that said elements (4,17) exhibit an irradiation growth in their longitudinal direction that deviates from that of said members (5,15), and that said elements (4,17) are provided with throttling bodies (9,14,16) which cooperate with the openings (7, 8) in the top tie plate (1) and/or the bottom tie plate (2) in such a way, that the change in the relative position between said throttling bodies (9,14,16) and said openings (7, 8) caused by the different irradiation growth of said elements (4,17) and said members (5,15), will bring about a change and/or a redistribution of the coolant flow within individual fuel assemblies and/or between the fuel assemblies of the nuclear reactor.

2. Device according to claim 1, **characterized** in that said elements (4,17) are made of material having a higher irradiation growth than of said members (5,15).

3. Device according to claim 1 **characterized** in that said elements (4,17) are made of a material having a lower irradiation growth than of said members (5,15).

4. Device according to any of the preceding claims, **characterized** in that the elements consist of fuel rods (4), the ends of at least some of which are provided with a throttling body so as to fit into corresponding openings (7, 8) in the top tie plate or bottom tie plate (1,2).

5. Device according to any of claims 1 to 3, **characterized** in that said elements (4,17) consist of control rod guide tubes (17) of the second type carrying throttle members (16) acting as throttling bodies and adapted to be moved towards the openings (7, 8) for throttling the coolant flow.

6. Device according to any of claims 1 to 3, **characterized** in that at least part of the fuel rods (4) or throttle members (16) carried by said control rod guide tubes (17) of the second type are provided near their free ends with a tapering portion (14) or a portion provided with longitudinal slots or the like and that said fuel rods or throttle members are arranged such with respect to the openings in the associated tie plate that the irradiation growth will bring about a reduction in the throttling effect.

**Patentansprüche**

1. Vorrichtung zur Steuerung des Kühlmittelstromes zu einem und durch ein Brennelement für einen Kernreaktor des BWR-Typs (Siedewasserreaktor) oder des PWR-Typs (Druckwasserreaktor), wobei zu dem Brennelement eine obere Verbundplatte (1), eine untere Verbundplatte (2), Brennstäbe (4) und Abstandshalter (3) gehören, wobei die beiden Verbundplatteen (1, 2) durch Glieder, wie zum Beispiel einer ersten Art von Steuerstabführungsrohren (15) oder einer Brennelementwand (5) verbunden sind und mit einer Vielzahl von Öffnungen (7, 8) für den Kühlmittelstrom versehen sind, und wobei zu dem Brennelement ferner langgestreckte Elemente gehören, die direkt oder indirekt von der oberen Verbundplatte (1) und/oder der unteren Verbundplatte (2) getragen werden, wie zum Beispiel Steuerstäbe (4) und/oder Steuerstabführungsrohren (17) einer zweiten Art, **dadurch gekennzeichnet**, daß die genannten Elemente (4, 17) ein Strahlungswachstum in ihrer Längsrichtung zeigen, welches verschieden ist von dem der genannten Glieder (5, 15), und daß die genannten Elemente (4, 17) mit Drosselkörpern (9, 14, 16) versehen sind, die mit den Öffnungen (7, 8) in der oberen Verbundplatte (1) und/oder der unteren Verbundplatte (2) derart zusammenarbeiten, daß die Veränderung der relativen Lage zwischen den genannten Drosselkörpern (9, 14, 16) und den genannten Öffnungen (7, 8), die durch unterschiedliches Strahlungswachstum der genannten Elemente (4, 17) und der Glieder (5, 11) bedingt sind, eine Änderung und/oder eine Umverteilung des Kühlmittelstromes innerhalb der einzelnen Brennelemente und/oder zwischen den Brennelementen des Kernreaktors herbeiführen.

2. Vorrichtung nach Anspruch 1, **dadurch gekennzeichnet**, daß die genannten Elemente (4, 17) aus einem Material bestehen, welches ein größeres Strahlungswachstum hat als das Material der genannten Glieder (5, 15).

3. Vorrichtung nach Anspruch 1, **dadurch gekennzeichnet**, daß die genannten Elemente (4, 7) aus einem Material bestehen, welches ein kleineres Strahlungswachstum hat als das Material der Glieder (5, 15).

4. Vorrichtung nach einem der vorhergehenden Ansprüche, **dadurch gekennzeichnet**, daß die Elemente aus Brennstäben (4) bestehen, wobei die Enden mindestens einiger Brennstäbe mit einem Drosselkörper versehen sind, welcher in die entsprechenden Öffnungen (7, 8) in der oberen Verbundplatte oder unteren Verbundplatte (1, 2) paßt.

5. Vorrichtung nach einem der Ansprüche 1-3, **dadurch gekennzeichnet**, daß die genannten Elemente (4, 17) aus Steuerstabführungsrohren (17) einer zweiten Art bestehen, die Drosselglieder (16) tragen, die als Drosselkörper wirken und in Richtung der Öffnungen (7, 8) zur Drosselung des Kühlmittelstromes verschoben werden können.

6. Vorrichtung nach einem der Ansprüche 1-3, **dadurch gekennzeichnet**, daß mindestens ein Teil der Brennstäbe (4) oder Drosselglieder (16), die von den genannten Steuerstabführungsrohren (17) der zweiten Art getragen werden, nahe ihren freien Enden mit einem abgeschrägten Abschnitt (14) oder mit einem Abschnitt mit längs verlaufenden Nuten oder dergleichen versehen ist und daß die genannten Brennstäbe oder Drosselglieder in Bezug auf die Öffnungen in der zugehörigen Verbundplatte derart angeordnet sind, daß das Strahlungswachstum zu einer Verminderung der Drosselwirkung führt.

## Revendications

1. Dispositif de commande du débit de l'agent de refroidissement s'écoulant vers un assemblage combustible d'un réacteur nucléaire de type BWR (réacteur à eau bouillante) ou PWR (réacteur à eau sous pression) et y passant, dans lequel l'assemblage combustible comprend une plaque d'assemblage supérieure (1), une plaque d'assemblage inférieure (2), des crayons combustibles (4) et des entretoises (3), les deux plaques d'assemblage (1, 2) étant reliées par des membrures, telles qu'un premier type de tubes-guides (15) de barres de contrôle ou une paroi (5) de l'assemblage combustible et étant munie de plusieurs orifices (7, 8) pour l'écoulement de l'agent de refroidissement, l'assemblage combustible comprenant en outre des éléments oblongs portés directement ou indirectement par la plaque d'assemblage supérieure (1) et/ou par la plaque d'assemblage inférieure (2), tels que des crayons combustibles (4) et/ou des tubes-guides (17) de barres de contrôle d'un second type, caractérisé en ce que les éléments (4, 17) présentent une croissance dans la direction longitudinale sous l'effet d'une exposition qui est différente de celle des membrures (5, 15) et les éléments (4, 17) sont munis de corps d'étranglement (9, 14, 16) qui coopèrent avec les orifices (7, 8) de la plaque d'assemblage supérieure (1) et/ou de la plaque d'assemblage inférieure (2), de manière que le changement de position relative des corps d'étranglement (9, 14, 16) et des orifices (7, 8), provoqué par la différence de l'allongement sous l'effet d'une irradiation des éléments (4, 17) et des membrures (5, 15) provoque un changement et/ou une redistribution du débit de l'agent de refroidissement dans les assemblages combustibles individuels et/ou entre les assemblages combustibles du réacteur nucléaire.

2. Dispositif suivant la revendication 1, caractérisé en ce que les éléments (4, 17) sont en un matériau ayant un allongement, sous l'effet d'une irradiation, supérieur à celui des membrures (5, 15).

3. Dispositif suivant la revendication 1, caractérisé en ce que les éléments (4, 17) sont en un matériau présentant un allongement, sous l'effet d'une irradiation, inférieur à celui des membrures (5, 15).

4. Dispositif suivant l'une quelconque des revendications précédentes, caractérisé en ce que les éléments consistent en crayons combustibles (4) dont les extrémités d'au moins certains d'entre eux sont munies d'un corps d'étranglement, de manière à s'adapter dans des orifices (7, 8) correspondants de la plaque d'assemblage supérieure ou de la plaque d'assemblage inférieure (1, 2).

5. Dispositif suivant l'une quelconque des revendications 1 à 3, caractérisé en ce que les éléments (4, 17) consistent en tubes-guides (17) de barres de contrôle du second type portant des éléments d'étranglement (16) agissant sur les corps d'étranglement et agencés de manière à se mouvoir vers les orifices (7, 8) pour étrangler l'écoulement de l'agent de refroidissement.

6. Dispositif suivant l'une quelconque des revendications 1 à 3, caractérisé en ce qu'au moins une partie des crayons combustibles (4) ou des éléments d'étranglement (7) portés par les tubes-guides (17) de barres de contrôle sont munis à proximité de leur extrémité libre d'une partie amincie (14) ou d'une partie munie de fentes longitudinale ou analogue, et les crayons combustibles ou les éléments. d'étranglement sont disposés, par rapport aux orifices de la plaque d'assemblage associée, de façon que l'allongement sous l'effet d'une irradiation provoque une réduction de l'effet d'étranglement.

FIG. 1

FIG. 4

FIG. 5

FIG. 2

FIG. 3

*FIG.6*